# EUROPÄISCHE PATENTANMELDUNG

(11) **EP 0 753 916 A2**
(43) Veröffentlichungstag der Anmeldung: **15.01.1997**
(21) Anmeldenummer: 96110568.1
(22) Anmeldetag: 28.06.1996
(51) Int. Cl.: H02B 1/21

(54) **Sammelschienen-Adaptersystem**

(30) Priorität: 12.07.1995 DE 19525438
(71) Anmelder: SIEMENS AKTIENGESELLSCHAFT, 80333 München (DE)
(72) Erfinder: Feuerer, Georg, Dipl.-Ing. (FH), 93133 Burglengenfeld (DE); Stang, Alfred, Dipl.-Ing. (FH), 92224 Amberg (DE)

(57) **Zusammenfassung**

Die Erfindung bezieht sich auf ein Sammelschienen-Adaptersystem (1) zum Anschluß z.B. eines Motorabzweigs (2,3), das ständig berührungssicher sowie einfach hinsichtlich Aufbau und Montage sein soll. Das erfindungsgemäße Sammelschienen-Adaptersystem (1) enthält eine aus einem Bodenteil (7) und einem Wannenoberteil (8) zusammengesetzte Wanne. Im Bodenteil (7) sind Halterungselemente (13,14,43) zur Aufnahme von Stromschienen (4,5,6) vorgesehen. Das Wannenoberteil (8) enthält frontseitig berührungssichere Öffnungen (19,20,21), durch welche Kontakte (9,10) an einem Adapteroberteil (11,12) zur Kontaktierung mit den Stromschienen (4,5,6) hindurchführbar sind. Dies erfolgt durch Einhängen und Aufschwenken des Adapteroberteils (11,12) an einem Drehpunkt (28) der Wanne (7,8).

## Beschreibung

Die Erfindung betrifft ein Sammelschienen-Adaptersystem mit einem wannenförmigen Unterteil, das Halterungselemente für Stromschienen aufweist, und mit einem das Unterteil zumindest teilweise abdeckenden Oberteil, an dessen dem Unterteil abgewandter Seite Befestigungselemente zur Befestigung von Schaltgeräten vorgesehen sind.

Ein gattungsgemäßes Sammelschienen-Adaptersystem ist aus der DE 34 09 211 A1 bekannt. Es handelt sich hier um eine Trageinrichtung zur Aufnahme von Installationsgeräten, die mit nach außenragenden Kontaktklemmen zur Verbindung der innenliegenden Stromschienen mit Sammelschienen versehen ist. Die Sammelschienen liegen hier offen, d.h. ein Berührungsschutz ist hier nicht gewährleistet. Die Trageinrichtung besteht im wesentlichen aus einem flachen Unterteil, das die drei Kontaktklemmen und die Stromschienen aufnimmt, und einem flachen mit dem Unterteil lösbar verschraubten Oberteil, auf dem eine Tragschiene zur Halterung der Installationsgeräte, beispielsweise eines Schutzschalters angeordnet ist.

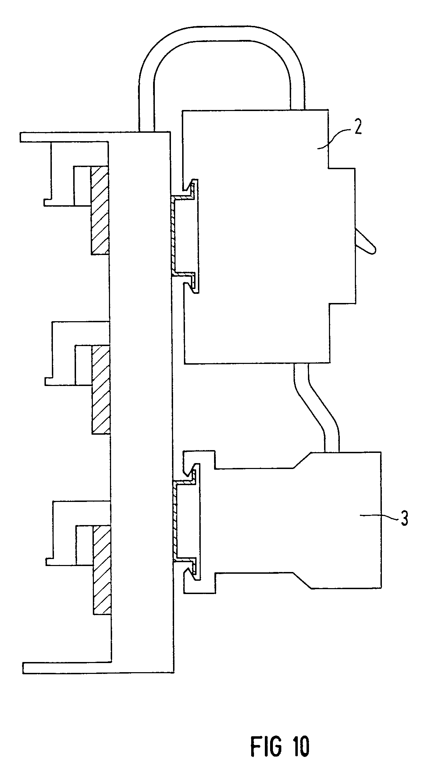

Ein Sammelschienen-Adaptersystem ist z.B. aus dem Katalog eines Elektroherstellers bekannt (siehe Siemens-Katalog: Sammelschienen-Adapter und Gerätekombinationen 8US zum Aufbau auf Sammelschienen, Bestell-Nr. E20001-P285-A379-V1). Mit Hilfe dieses Adapters, wie er in FIG 10 dargestellt ist, können Schaltgeräte und Sicherungen direkt auf den Sammelschienen befestigt und elektrisch kontaktiert werden. Der Adapter trägt frontseitig zwei Hutschienen, auf die Schaltgeräte aufschnappbar sind. An der Rückwand des Adapters sind Befestigungshaken mit Kontakten vorhanden, die nach Aufsetzen und Herabschieben des Adapters auf die Sammelschienen diese über eine Druckkontaktierung kontaktieren. Von den Kontakten sind nach außen geführte Verbindungsleitungen, z.B. an einen Leistungsschalter angeschlossen, der wiederum mit einem Schütz verbunden ist. Beim Abnehmen eines solchen Motorabzweigs vom Sammelschienensystem werden nicht automatisch alle Anschlüsse getrennt, d.h. der Berührungsschutz ist nicht ständig vorhanden. Unter Last stehende Adapter sind nicht verriegelt und können abgenommen werden. Die Zuführung einer Kommunikation direkt an den Motorabzweig ist noch nicht realisiert.

Der Erfindung liegt daher die Aufgabe zugrunde, ein Sammelschienen-Adaptersystem der obengenannten Art zu schaffen, das hinsichtlich Aufbau und Montage einfach ist und ständig einen sicheren Berührungsschutz gewährleistet.

Erfindungsgemäß wird die Aufgabe dadurch gelöst, daß das Unterteil einen durch einen Bodenteil und ein dieses abdeckendes Wannenoberteil gebildeten Innenraum aufweist, in dem die Halterungselemente liegen und daß das Wannenoberteil frontseitig mit zur Kontaktierung mit den Stromschienen dienenden Öffnungen versehen ist.

Vorteilhafte Weiterbildungen der Erfindung sind den Unteransprüchen 2 bis 18 zu entnehmen.

Eine besonders vorteilhafte Ausführungsform besteht, wenn das Adapteroberteil an der Wanne einhängbar und auf diese derart aufschwenkbar ist, daß mit dem Aufschwenken die Kontaktierung der Stromschienen mit den Kontakten erfolgt. Diese Lösung ist insbesondere platzsparend, da zur Kontaktierung kein Verschiebeweg benötigt wird.

Vorteilhafterweise umfaßt das Adapteroberteil eine aufschwenkbare Schwenkplatte und eine zugehörige Abdeckung.

Zur Befestigung von Schaltgeräten ist es vorteilhaft, wenn das Adapteroberteil hutschienenförmige Befestigungselemente aufweist.

Zum elektrischen Anschluß und zur Montage einer Mehrzahl von Schaltgeraten ist es vorteilhaft, wenn die Wanne mittels randseitig vorgesehener Befestigungsmittel erweiterbar ist.

Sind die Halterungselemente als U-förmige Aufnehmungen ausgeführt, so können hiermit die Stromschienen auf einfache Weise gehalten werden.

Außerdem ist es vorteilhaft, wenn in dem den Öffnungen benachbarten Bereich das Wannenoberteil an seiner Innenseite den Halterungselementen gegenüberliegend Stützelemente zur Halterung der Stromschienen aufweist.

Die Montage wird erleichtert, wenn das Bodenteil und das Wannenoberteil miteinander verrastbar sind. Um die Stromschienen an beliebiger Stelle anschließen zu können, ist es vorteilhaft, wenn die Öffnungen im Wannenoberteil rasterartig angeordnet sind.

Die Ansprüche 10 bis 12 betreffen vorteilhafte Ausbildungen der Öffnungen für unterschiedlich ausgeführte Stromschienen.

Um eine hohe Kurzschlußfestigkeit und Kontaktsicherheit Zu erhalten, ist es von Vorteil, wenn als Kontakte Lyrakontakte dienen.

In Anwendungsfällen mit geringeren Anforderungen an die Stromübergänge ist auch die Verwendung von Druckkontakten vorteilhaft.

Die Kontaktierung der Lyrakontakte mit den Sammelschienen kann auf einfache Weise dadurch erleichtert werden, daß die Lyrakontakte am Adapteroberteil drehbar gelagert sind.

Die Drehbarkeit läßt sich vorteilhaft dadurch erreichen, daß das Adapteroberteil mit gewölbten Auflagebereichen für die Lyrakontakte versehen ist.

Weiterhin ist es vorteilhaft, wenn durch das Aufschwenken des Adapteroberteils einzelne Stromschienen gegenüber anderen voreilend kontaktierbar sind, was z.B. die Kontaktierung mit der Nullsammelschiene vor den Phasen, d.h. den Hauptstromleitern des Sammelschienensystems, ermöglicht.

Schließlich ist es auch vorteilhaft, wenn ein Mikroschalter beim Abnehmen des Adapterteils automatisch die Abschaltung des Laststroms angeschlossener Schaltgeräte auslöst, bevor die Kontakte von den Stromschienen getrennt werden. Dies hat zur Folge, daß ein Abnehmen des Adapters unter Last nicht möglich ist.

Ein Ausführungsbeispiel der Erfindung wird im folgenden anhand einer Zeichnung näher erläutert.

Es zeigen:
- FIG 1: ein Sammelschienen-Adaptersystem mit aufgeschnappten Leistungsschalter und Schütz,
- FIG 2: eine Seitenansicht einer Wanne des Sammelschienen-Adaptersystems im Schnitt,
- FIG 3: eine Draufsicht auf die Frontseite der Wanne des Sammelschienen-Adaptersystems,

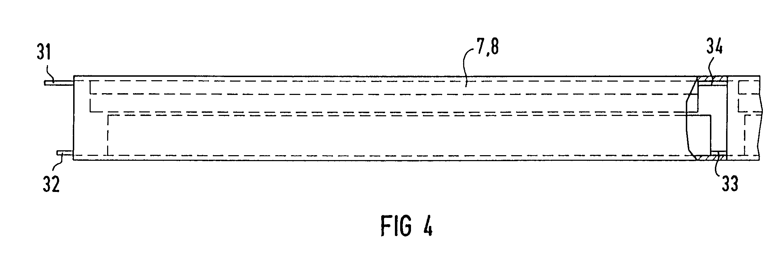

- FIG 4: eine weitere Seitenansicht der Wanne gemäß FIG 2,
- FIG 5: eine Draufsicht auf die Frontseite der Wanne des Sammelschienen-Adaptersystems mit angeschlossenen Sammelschienen,
- FIG 6: eine Draufsicht auf die Wanne mit aufgesetztem Adapteroberteil,
- FIG 7 a,b,c,d: ein Sammelschienen-Adaptersystem in verschiedenen Schwenkstellungen,
- FIG 8: einen Ausschnitt aus der Wanne mit in dem Adapteroberteil steckenden Lyrakontakten,
- FIG 9: einen Ausschnitt aus der Wanne mit einer Detaildarstellung der Befestigung,
- FIG 10: einen bereits bekannten Adapter.

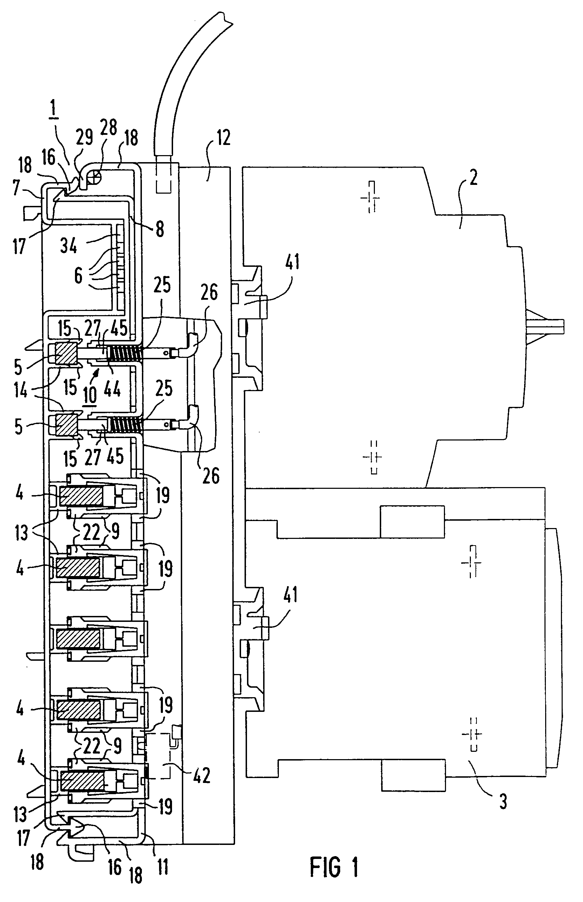

FIG 1 zeigt ein Sammelschienen-Adaptersytem 1 zum Anschluß von Schaltgeräten, z.B. eines aus einem Leistungsschalter 2 und einem Schütz 3 bestehenden Motorabzweigs, an ein Sammelschienensystem. Dieses umfaßt hier beispielhaft fünf im Querschnitt rechteckförmige Sammelschienen 4 als Hauptleiter, zwei im Querschnitt quadratische Kupferschienen 5 als Hilfsstromleitungen, z.B. zum Anschluß von Schützspulen, und eine vierpolige Busschiene 6, wenn eine Kommunikation mit intelligenten Schaltgeräten vorgesehen ist.

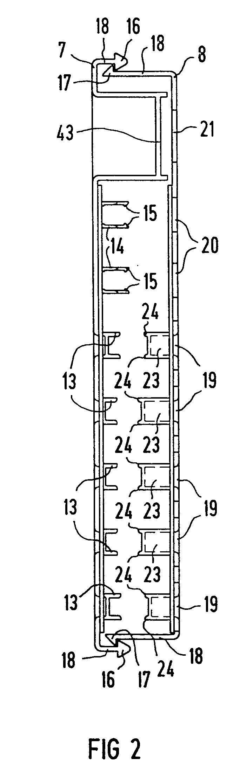

Das Sammelschienen-Adaptersystem 1 besteht im wesentlichen aus einer zweiteilig aufgebauten Wanne 7,8 als Adapterunterteil und einer die Kontakte 9,10 tragenden Schwenkplatte 11 mit aufgesetzter Abdeckung 12 als Adapteroberteil. Im Bodenteil 7 der Wanne sind, an die Anordnung des Sammelschienensystems angepaßt, Halterungselemente zur Aufnahme der Stromleitungen 4,5,6 vorgesehen. Für die Sammelschienen 4 und die Kupferschienen 5 sind dies an deren Querschnittsabmessungen angepaßte U-förmige Aufnehmungen 13 bzw. 14. Zur Aufnahme der vierpoligen Busschiene 6 ist das Halterungselement 43 vorgesehen. Die Sammelschienen 4 stecken nur teilweise in den entsprechenden Aufnehmungen 13 während die Kupferschienen 5 von den zugehörigen Aufnehmungen 14 über Rastnasen 15 vollkommen umklammert sind. Das Wannenoberteil 8 der Wanne ist mit dem Bodenteil 7 über Rastnasen 16,17 an den Wannenwänden 18 verrastet. Den Aufnehmungen 13,14 gegenüberliegend sind in dem Wannenoberteil in rasterförmiger Anordnung Öffnungen 19,20,21 eingearbeitet, die zur Kontaktierung der Stromleitungen 4,5,6 dienen. Dabei sind die Öffnungen für die Sammelschienen 4 als Schlitze 19 und für die Busschiene 6 als Schlitze 21 ausgeführt. Die Kupferschiene 5 sind über kreisförmige Öffnungen 20 kontaktierbar. Im zu den Öffnungen 19 benachbarten Bereich ist, den Aufnehmungen 13 gegenüberliegend, das Wannenoberteil 8 mit Stützelementen 23 mit einem Kragen 24 versehen, womit die Sammelschienen 4 unter Umklammerung durch den Kragen 24 festgehalten werden, wie es in FIG 2 dargestellt ist. Dabei wird der Kontaktdruck durch die auf die Lyrakontakte 9 aufgesteckten Federelemente 22 hergestellt. Zur Kontaktierung der Kupferschienen 5 sind federbelastete Druckkontakte 10 vorhanden, die durch einen Stift 23 mit einer Federanlage 24 gebildet sind, über die eine Druckfeder 25 im zusammenmontierten Zustand den Stift 23 mit seinem einen Ende auf die quadratische Kupferschiene 5 drückt. Am anderen Ende ist der Stift mit einem Leiter 26 verlötet. Der derart ausgebildete Druckkontakt 10 ist in einem formmäßig angepaßten länglichen Hohlraum 27 mit kreisförmigen Querschnitt eingesteckt.

Das Adapteroberteil ist über seine Schwenkplatte 11 mittels eines im Einbauzustand an der Oberseite angeformten Hakens 29 an einem Drehpunkt 28 der Wanne 7,8 einhängbar und auf diese aufschwenkbar. An der Unterseite verrastet die Schwenkplatte 11 in vollkommen aufgeschwenkter Position an der Wanne 7,8. In FIG 1 ist auf die Schwenkplatte 11 eine Abdeckung 12 aufgesetzt, die an ihrer Frontseite hutschienenförmige Befestigungselemente 41 trägt, auf die der Leistungsschalter 2 und das Schütz 3 aufgeschnappt sind.

Das Sammelschienen-Adaptersystem 1 enthält einen Mikroschalter 42, der beim Auf- und Abschwenken des Adapteroberteils 11,12 auf die Wanne 7,8 jeweils betätigt wird und über den z.B. je nach Verdrahtung der Leistungsschalter 2 oder die Spule des Schützes 3 zugeschaltet oder getrennt werden können. Außerdem kann der Mikroschalter 42 auch zur Ansteuerung weiterer Stromkreise verwendet werden. Durch diese technische Ausbildung kann ein Abnehmen des Adapteroberteils 11,12 unter Last verhindert werden.

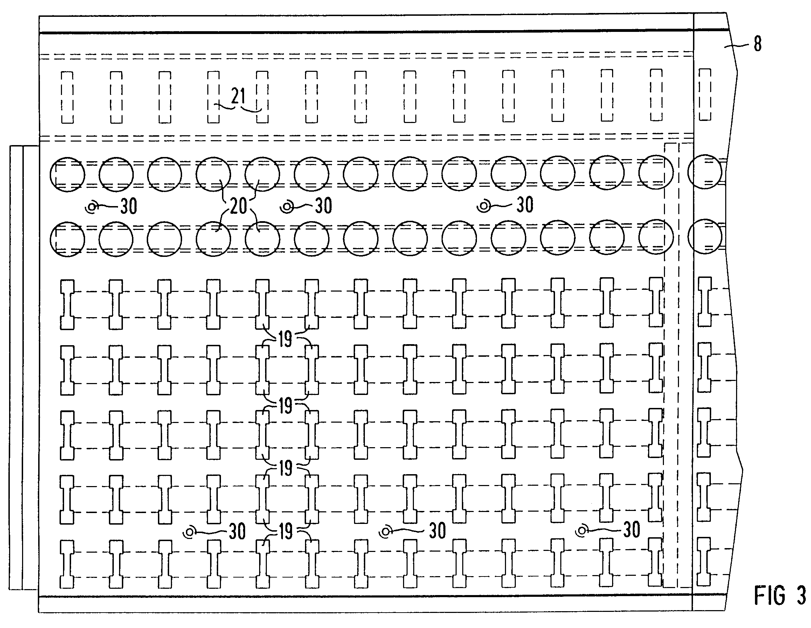

FIG 3 zeigt eine Frontansicht der Wanne 7,8, in der die rasterförmige Anordnung der Öffnungen 19,20,21 sichtbar ist, deren Ausbildung und Funktion im Zusammenhang mit FIG 1 bereits beschrieben wurde. Ebenfalls sind die Befestigungspunkte 30 für die Wanne 7,8 rasterförmig angeordnet. Die Wanne 7,8 ist eine erweiterbare Einheit, die an ihrem einen Rand in der Verlängerung des Bodenteils 7 und der Schwenkplatte 8 jeweils einen Steg 31 bzw. 32 aufweist und an derem gegenüberliegenden Rand, den Abmessungen dieser Stege 31,32 angepaßt, sich im Bodenteil 7 und in der Schwenkplatte 11 jeweils ein Schlitz 33 bzw. 34 zur Aufnahme der Stege 31,32 einer weiteren Wanne, d.h. zur modularen Erweiterung befindet.

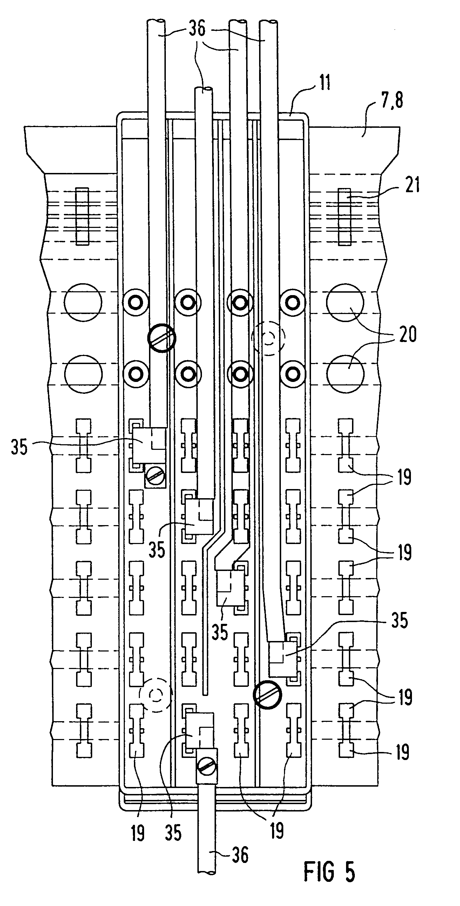

In FIG 5 ist eine Draufsicht auf die Schwenkplatte 11 des Adapteroberteils dargestellt, die auf eine Wanne 7,8 aufgeschwenkt ist, d.h. es liegt der kontaktierte Zustand vor. Sämtliche fünf Sammelschienen sind über in Schlitzen 19 der Schwenkplatte 11 steckende Lyrakontakte 9 kontaktiert, unter deren hier abgebildeten Querstegen 35 Verbindungsleitungen 36 eingeklemmt sind.

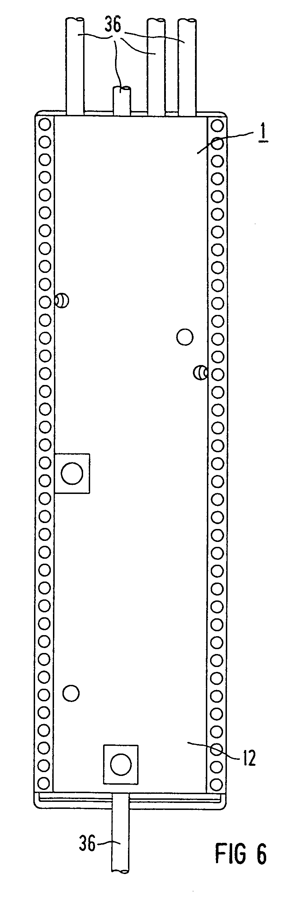

FIG 6 zeigt die Frontansicht des Sammelschienen-Adaptersystems 1 mit der Abdeckung 12, die allerdings hier keine Befestigungselemente 41 für die Schaltgeräte 2,3 trägt.

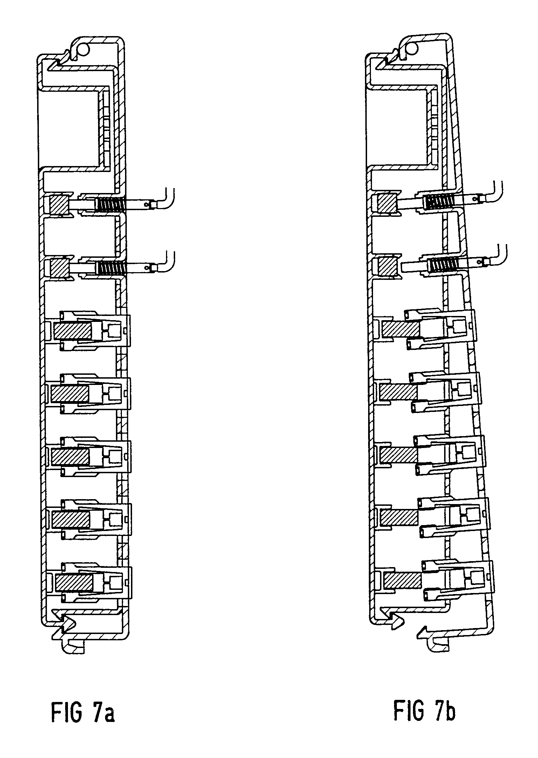

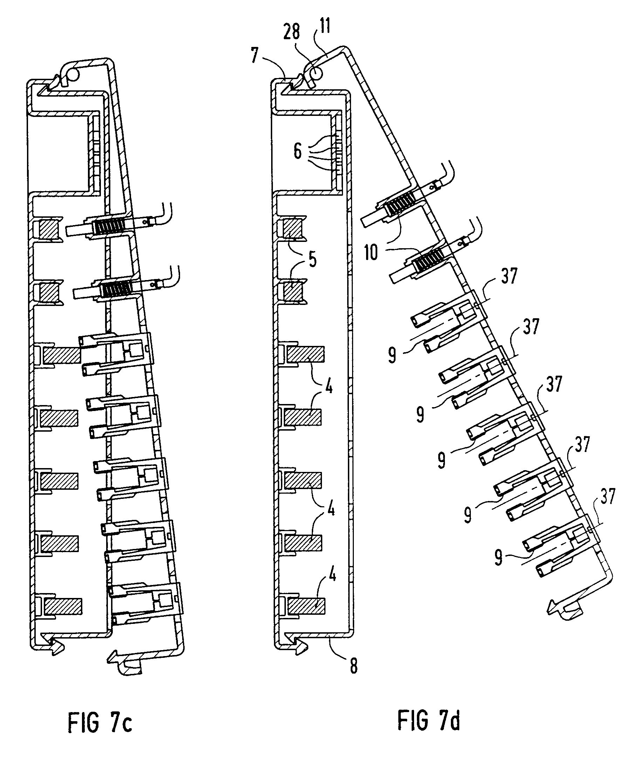

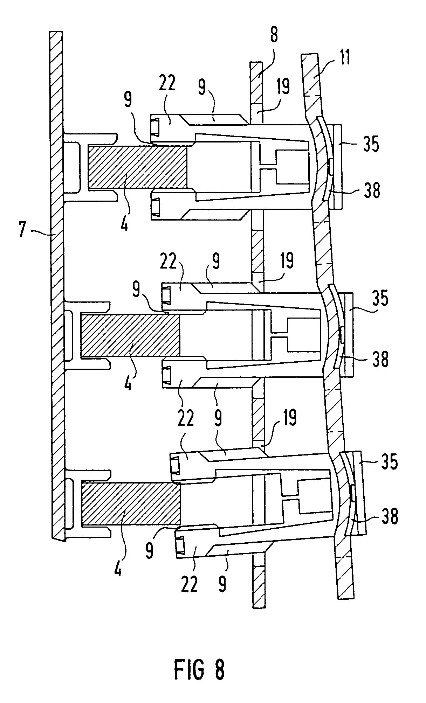

In FIG 7a,b,c,d sind die Wanne 7,8 und die Schwenkplatte 11 mit den Kontakten 9,10 in verschiedenen Schwenkstellungen dargestellt. Hier wird deutlich, daß beim Aufschwenken die Kontakte 9 bzw. 10 sich auf einer um so stärker gekrümmten Kreisbahn bewegen, je näher diese zum Drehpunkt 28 liegen. Dieser Umstand ist für die Druckkontakte 10, die zurückfedern, weniger problematisch. Daher sind diese dem Drehpunkt 28 am nächsten angeordnet. Das Aufschwenken der Lyrakontakte 9 stellt sich dagegen sehr viel problematischer dar, wie der Darstellung zu entnehmen ist, da zwischen der Mittelachse 37 der Lyrakontakte 9 und den betreffenden Sammelschienen 4 relativ große Winkel in der Stellung erstmaliger Berührung bestehen und daher ein Verkanten bis hin zur Zerstörung ohne zusätzliche Maßnahmen durchaus möglich ist. Um dieses Problem zu beseitigen, sind die Lyrakontakte 9 in ihrem Einführungsbereich an den Innenseiten abgeschrägt. Außerdem ist an der Schwenkplatte 11 gemäß FIG 8 ein gewölbter Auflagebereich 38 für die federbelasteten Lyrakontakte 9 vorhanden, so daß diese sich beim Einschwenken auf die Sammelschienen 4 in ihrer Lage in erforderlicher Weise selbst anpassen können.

Ein wesentlicher Vorteil der durch das Aufschenken bewirkten Kontaktierung besteht darin, daß die dem Drehpunkt 28 näher liegenden Kontakte (9,10) die zugehörigen Stromschienen (4,5) früher kontaktieren als die weiter entfernt liegenden. Diese voreilende Kontaktierung ermöglicht es, die Nullschiene N vor den drei Phasen der Sammelschienen 4 zuzuschalten.

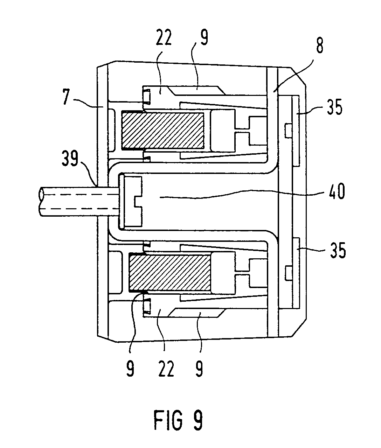

Zur Befestigung der Wanne 7,8, z.B. an der Rückwand eines Schaltschranks, dienen Befestigungslöcher 39, die durch das Bodenteil 7 und einer bis zu diesem reichende Ausformung 40 gemäß FIG 9 hindurchführen.

## Patentansprüche

1. Sammelschienen-Adaptersystem (1) mit einem wannenförmigen Unterteil (7,8), das Halterungselemente (13,14,43) für Stromschienen (4,5,6) aufweist, und mit einem das Unterteil (7,8) zumindest teilweise abdeckenden Oberteil (11,12), an dessen dem Unterteil (7,8) abgewandter Seite Befestigungselemente (41) zur Befestigung von Schaltgeraten vorgesehen sind, **dadurch gekennzeichnet**, daß das Unterteil einen durch ein Bodenteil (7) und ein dieses abdeckendes Wannenoberteil (8) gebildeten Innenraum aufweist, in dem die Halterungselemente (13,14,43) liegen und daß das Wannenoberteil (8) frontseitig mit zur Kontaktierung mit den Stromschienen (4,5,6) dienenden Öffnungen (19,20,21) versehen ist, durch die die Stromschienen (4,5,6) kontaktierende Kontakte (9,10) an der dem Unterteil (7,8) zugewandten Seite des Oberteils (11,12) im angeschlossenen Zustand hindurchgreifen.

2. Sammelschienen-Adaptersystem, **dadurch gekennzeichnet**, daß das Adapteroberteil (11,12) an der Wanne (7,8) einhängbar und auf diese derart aufschwenkbar ist, daß mit dem Aufschwenken die Kontaktierung der Stromschienen (4,5) mit den Kontakten (9,10) erfolgt.

3. Sammelschienen-Adaptersystem nach Anspruch 1 oder 2, **dadurch gekennzeichnet**, daß das Adapteroberteil eine aufschwenkbare Schwenkplatte (11) und eine zugehörige Abdeckung (12) umfaßt.

4. Sammelschienen-Adaptersystem nach einem der vorangehenden Ansprüche, **dadurch gekennzeichnet**, daß das Adapteroberteil (11,12) hutschienenförmige Befestigungselemente (41) aufweist.

5. Sammelschienen-Adaptersystem nach einem der vorangehenden Ansprüche, **dadurch gekennzeichnet**, daß die Wanne (7,8) mittels randseitig vorgesehener Befestigungsmittel (31,32,33,34) erweiterbar ist.

6. Sammelschienen-Adaptersystem nach einem der vorangehenden Ansprüche, **dadurch gekennzeichnet**, daß die Halterungselemente als U-förmige Aufnehmungen (13,14) ausgeführt sind.

7. Sammelschienen-Adaptersystem nach einem der vorangehenden Ansprüche, **dadurch gekennzeichnet**, daß in dem den Öffnungen (19) benachbarten Bereich das Wannenoberteil (8) an seiner Innenseite, den Halterungselementen (14) gegenüberliegend, Stützelemente (23) zur Halterung der Stromschienen (5) aufweist.

8. Sammelschienen-Adaptersystem nach einem der vorangehenden Ansprüche, **dadurch gekennzeichnet**, daß das Bodenteil (7) und das Wannenoberteil (8) miteinander verrastbar sind.

9. Sammelschienen-Adaptersystem nach einem der vorangehenden Ansprüche, **dadurch gekennzeichnet**, daß die Öffnungen (19,20,21) im Wannenoberteil (8) rasterartig angeordnet sind.

10. Sammelschienen-Adaptersystem nach einem der vorangehenden Ansprüche, **dadurch gekennzeichnet**, daß als Stromschienen Sammelschienen (4) dienen, zu deren Kontaktierung die Öffnungen als Schlitze (19) ausgeführt sind.

11. Sammelschienen-Adaptersystem nach einem der vorangehenden Ansprüche, **dadurch gekennzeichnet**, daß als Stromschiene eine Busschiene (6) dient, zu deren Kontaktierung die Öffnungen als weitere Schlitze (21) ausgeführt sind.

12. Sammelschienen-Adaptersystem nach einem der vorangehenden Ansprüche, **dadurch gekennzeichnet**, daß Stromschienen (5) zur Energieversorgung der Spule eines Schaltgeräts (3) vorgesehen sind.

13. Sammelschienen-Adaptersystem nach einem der vorangehenden Ansprüche, **dadurch gekennzeichnet**, daß als Kontakte Lyrakontakte (9) dienen.

14. Sammelschienen-Adaptersystem nach einem der vorangehenden Ansprüche, **dadurch gekennzeichnet**, daß die Lyrakontakte (9) am Adapteroberteil (11,12) drehbar gelagert sind.

15. Sammelschienen-Adaptersystem nach einem der vorangehenden Ansprüche, **dadurch gekennzeichnet**, daß das Adapteroberteil (11,12) mit gewölbten Auflagebereichen (38) für die Lyrakontakte (9) versehen ist.

16. Sammelschienen-Adaptersystem nach einem der vorangehenden Ansprüche, **dadurch gekennzeichnet**, daß als Kontakte Druckkontakte (10) dienen.

17. Sammelschienen-Adaptersystem nach einem der vorangehenden Ansprüche, **dadurch gekennzeichnet**, daß durch das Aufschwenken des Adapteroberteils (11,12) auf die Wanne (7,8) einzelne Stromschienen (4) gegenüber anderen voreilend kontaktierbar sind.

18. Sammelschienen-Adaptersystem nach einem der vorangehenden Ansprüche, **gekennzeichnet durch** einen Mikroschalter (42), der beim Abnehmen des Adapteroberteils (11,12) automatisch die Abschaltung des Laststroms angeschlossener Schaltgeräte (2,3) auslöst, bevor die Kontakte (9,10) von den Stromschienen (4,5) getrennt werden.
